# EUROPÄISCHE PATENTSCHRIFT

(11) **EP 3 008 135 B1**
(45) Veröffentlichungstag und Bekanntmachung des Hinweises auf die Patenterteilung: **23.10.2019**
(21) Anmeldenummer: 14729329.4
(22) Anmeldetag: 11.06.2014
(51) Int. Cl.: C09D 4/06, C09D 133/00, C09D 5/00, C09D 7/00

(54) **BLENDFREIE, MIKROSTRUKTURIERTE UND SPEZIELL BESCHICHTETE FOLIE**
GLARE-FREE, MICROSTRUCTURED, AND SPECIALLY COATED FILM
FEUILLE ANTIREFLET MICRO-STRUCTURÉE ET À REVÊTEMENT SPÉCIAL

(30) Priorität: 14.06.2013 EP 13172189
(43) Veröffentlichungstag der Anmeldung: 20.04.2016
(73) Patentinhaber: Covestro Deutschland AG, 51373 Leverkusen (DE)
(72) Erfinder: KOSTROMINE, Serguei, 53913 Swisttal-Buschhoven (DE); PETZOLDT, Joachim, 40789 Monheim (DE); BENECKE, Carsten, 79576 Weil am Rhein (DE)
(74) Vertreter: Levpat
(86) Internationale Anmeldenummer: PCT/EP2014/062058
(87) Internationale Veröffentlichungsnummer: WO 2014/198739

(56) Entgegenhaltungen:
- EP-A1- 0 664 489
- CN-A- 101 493 533
- JP-A- 2004 233 998
- US-A1- 2009 163 614
- US-A1- 2011 171 476

## Beschreibung

Die vorliegende Erfindung betrifft eine blendfreie beschichtete Kunststofffolie sowie ein Beschichtungsmittel zum Beschichten einer blendfreien Kunststofffolie. Des Weiteren betrifft die vorliegende Erfindung ein Erzeugnis, umfassend die erfindungsgemäße blendfreie beschichtete Folie sowie deren Verwendung als hochtransparente blendfreie Frontscheibe für Displays, insbesondere für Displays von Computerbildschirmen, Fernsehern, Anzeigegeräten und Mobilfunktelefonen, sowie für nichtglänzende Kunststoffteile, insbesondere solche in den Bereichen der Elektrik, Elektronik und Fahrzeuginnenausstattung. Außerdem betrifft die vorliegende Erfindung ein Verfahren zur Herstellung der blendfreien beschichteten Folien.

Unter einer blendfreien (engl.: anti-glare) Oberfläche versteht man eine optische Grenzfläche, bei der die reguläre Reflektion (engl.: specular reflection) vermindert wird (Becker, M.E. and Neumeier, J., 70.4: Optical Characterization of Scattering Anti-Glare Layers, SID Symposium Digest of Technical Papers, SID, 2011, 42, 1038-1041). Typische Anwendungen solcher Oberflächen findet man in der Displaytechnik, aber auch in den Bereichen Architektur, Möbel usw. Dabei kommt der blendfreien Ausgestaltung von Folien aufgrund ihres breiten Anwendungsspektrums eine besondere Aufmerksamkeit zu.

Es existieren verschiedene Methoden in der Technik, die Oberfläche einer Folie blendfrei zu gestalten, wie beispielsweise durch aufgeraute Oberflächen (Huckaby, D.K.P. & Caims, D.R., 36.2, Quantifying "Sparkle" of Anti-Glare Surfaces, SID Symposium Digest of Technical Papers, 2009, 40, 511-513), durch in die Oberflächenschicht eingebettete Mikro- oder Nanopartikel (Liu, B.T., Teng, Y.T., A novel method to control inner and outer haze of an anti-glare film by surface modification of light-scattering particles, Journal of Colloid and Interface Science, 2010, 350, 421-426) oder durch eingeprägte Mikro- bzw. Nanostrukturen in die Oberfläche (Boerner, V., Abbott, S. Bläsi, B., Gombert, A., Hoßfeld, W., 7.3, Blackwell Publishing Ltd., 2003, 34, 68-71). Eine weitere Methode besteht darin, die streuende Funktion durch eine Phasenseparation in der Oberflächenschicht herzustellen (Stefan Walheim, Erik Schäffer, Jürgen Mlynek, Ullrich Steiner, Nanophase-Separated Polymer Films as High-Performance Antireflection Coatings, Science, 1999, 283, 520-522).

US 2009/0163614 A1 offenbart eine Beschichtungszusammensetzung, die ein thermoplastisches Harz umfasst, wobei das thermoplastische Harz ausgewählt ist aus der Gruppe bestehend aus Polycycloolefinharzen, Polyesterharzen, Polyacrylatharzen und deren Mischungen und einer strahlenhärtbaren Beschichtungszusammensetzung.

CN 101 493 533 A offenbart ein blendfreies Mehrschicht-Beschichtungssystem, welches Mikropartikel umfasst, welches zur Beschichtung von Triacetatcellulose (TAC) optischen Filmen eingesetzt wird.

JP 2004 233998 A offenbart photosensitive Beschichtungszusammensetzungen als Spacer in LCDs. Die Beschichtungszusammensetzung umfasst ein Alkali-lösliches Resin, polymerisierbare Verbindungen mit ethylenisch ungesättigten Gruppen, Fotoinitiator und Lösungsmittel.

EP0664489 A1 offenbart wasserlösliche, strahlenhärtbare Bindemittel, umfassend ein Latex-Bindemittel mit Sulfonsäuregruppen als Säure-Funktionalitäten.

WO 2005/080484 A1 offenbart eine strahlenhärtbare Verbundschichtplatte oder Folie aus mindestens einer Substratschicht und einer Deckschicht, die eine strahlungshärtbare Masse mit einer Glasübergangstemperatur unter 50 °C mit hoher Doppelbindungsdichte enthält.

Ein im Stand der Technik verbreitetes Verfahren zur blendfreien Ausgestaltung einer Folienoberfläche sieht vor, eine Mikrostruktur in die Folienoberfläche einzuprägen. Transparente Folien, die dafür insbesondere verwendet werden, bestehen beispielsweise aus Polycarbonat, wie sie unter anderem unter dem Handelsnamen Makrofol® vom Hersteller Bayer Material Science AG erhältlich sind. Folien solcher Art werden beispielsweise durch Extrusion hergestellt, wobei die oberflächliche Strukturierung der Folie durch Prägen mit speziellen Walzen in das noch nicht vollständig erkaltete Polycarbonat erzeugt wird. Folien dieser Art sind beispielsweise unter den Bezeichnungen Makrofol® 1-M und 1-4 vom Hersteller Bayer Material Science AG verfügbar. Die auf diese Weise erhaltene Oberfläche ist damit blendfrei, dabei aber empfindlich gegenüber vielen Lösungsmitteln und zusätzlich weich und kratzempfindlich.

Eine besondere Herausforderung besteht darin, eine möglichst blendfreie Oberfläche bei gleichzeitig hoher Transparenz der Folie zu realisieren. Eine weitere besondere Herausforderung für den Fachmann liegt darin, die Oberfläche einer Folie nicht nur blendfrei, sondern gleichzeitig auch ausreichend kratzbeständig sowie wasser- und lösemittelbeständig zu gestalten. Darüber hinaus ist im Bereich Displaytechnik die Lesbarkeit bzw. Erkennbarkeit ("readability" bzw. "legibility") ein wichtiges Kriterium für die Verwendbarkeit einer Folie in diesem Gebiet. Die Erfüllung dieses Anforderungsprofils, also die Bereitstellung einer transparenten Folie mit einer blendfreien und kratzfesten Oberfläche sowie einer hohen Wasser- und Lösemittelbeständigkeit, ist schwer zu realisieren. Es besteht daher ein besonderer Bedarf an Folien, die dieses Anforderungsprofil erfüllen.

Überraschenderweise wurde festgestellt, dass ein solches Anforderungsprofil erreicht werden kann, wenn folgendes verwendet wird: Eine Kunstofffolie mit einer blendfrei ausgestalteten Oberfläche und einer Beschichtung gemäß Ansprüche 1 bis 4 auf dieser Oberfläche, wobei die Beschichtung erhältlich ist durch Beschichten mit einem Beschichtungsmittel, umfassend
(a) mindestens ein thermoplastisches Polymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel;
wobei der Feststoffgehalt des Beschichtungsmittels im Bereich von ≥ 0 bis ≤ 40 Gew.-%, gemessen am Gesamtgewicht des Beschichtungsmittels, liegt, und wobei der Anteil an ethylenisch ungesättigten Gruppen mindestens 3 mol pro kg des Festanteils des Beschichtungsmittels beträgt.

Die vorliegende Erfindung gemäß Ansprüche 5 bis 9 stellt daher folgendes bereit: Eine blendfreie Kunststofffolie, umfassend eine Kunstofffolie mit einer blendfrei ausgestalteten Oberfläche und einer Beschichtung auf dieser Oberfläche, wobei die Beschichtung erhältlich ist durch Beschichten mit einem Beschichtungsmittel gemäß mindestens einem der Ansprüche 1 bis 4. Bevorzugt können Folien aus thermoplastischen Kunststoffen wie Polycarbonat, Polyacrylat oder Poly(meth)acrylat, Polysulfone, Polyester, thermoplastisches Polyurethan und Polystyrol sowie deren Copolymere und Mischungen (Blends) eingesetzt werden. Geeignete Thermoplasten sind beispielsweise Polyacrylate, Poly(meth)acrylate (z.B. PMMA; z.B. Plexiglas® des Herstellers Röhm), Cycloolefin-Copolymere (COC; z.B. Topas® des Herstellers Ticona; Zenoex® des Herstellers Nippon Zeon oder Apel® des Herstellers Japan Synthetic Rubber), Polysulfone (Ultrason@ von der BASF oder Udel® von der Hersteller Solvay), Polyester, wie z.B. PET oder PEN, Polycarbonat (PC), Polycarbonat/Polyester-Blends, z.B. PC/PET, Polycarbonat/Polycyclohexylmethanolcyclohexandicarboxylat (PCCD; Xylecs® des Herstellers GE), Polycarbonat/PBT und Mischungen daraus.

Als besonders vorteilhaft haben sich Folien aus Polycarbonaten oder Copolycarbonaten aufgrund ihrer Transparenz und der Eignung für eine Mikrostrukturierung im Sinne einer blendfreien Ausgestaltung erwiesen. Beispielhaft als für die vorliegende Erfindung besonders vorteilhaft zu verwendenden Polycarbonatfolien sind die von der Bayer MaterialScience AG angebotenen Polycarbonatfolien zu erwähnen, welche auf einer Seite eine mikrostrukturierte Oberfläche und auf der anderen Seite eine glänzende bzw. glatte Oberfläche aufweisen. Die genannten Folien sind unter den Bezeichnungen 1-M und 1-4 erhältlich, wobei eine Seite hochglänzend (Seite 1) und die andere Seite unterschiedlich (Seite M oder Seite 4) mikrostrukturiert ist. Die Seiten M oder 4 entstehen bei der Herstellung der Folien durch Präge-Einwirkung von unterschiedlich rauen Walzen. Sie unterscheiden sich durch die mittlere Tiefe bzw. Rautiefe (Rz, DIN EN ISO 4287) der eingeprägten Struktur. Bevorzugt werden Polycarbonate oder Copolycarbonate eingesetzt. In einer besonders bevorzugten Ausführungsform der vorliegenden Erfindung umfasst die Kunststofffolie eine Polycarbonatfolie.

Geeignete Polycarbonate für die Herstellung der erfindungsgemäßen Folie sind alle bekannten Polycarbonate. Dies sind Homopolycarbonate, Copolycarbonate und thermoplastische Polyestercarbonate. Die geeigneten Polycarbonate haben bevorzugt mittlere Molekulargewichte M̅ _{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden. Zum Phasengrenzflächenverfahren sei beispielhaft auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate können aus Reaktionen von Bisphenolverbindungen mit Kohlensäureverbindungen, insbesondere Phosgen oder beim Schmelzeumesterungsprozess Diphenylcarbonat bzw. Dimethylcarbonat, erhalten werden. Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt. Weitere Bisphenolverbindungen, die sich für die Polycarbonatsynthese einsetzen lassen, sind unter anderem offenbart in WO-A-2008037364, EP-A-1 582 549, WO-A-2002/026862 und WO-A-2005/113639.

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B 4 185 009, DE-A 25 00 092, DE-A 42 40 313, DE-A 19 943 642, US-B 5 367 044 sowie in hierin zitierter Literatur. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP-A-1 506 249 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Unter optisch zumindest partiell blendfreien Oberflächen werden Oberflächen verstanden, bei denen die reguläre Lichtreflexion deutlich reduziert ist. Die reguläre Lichtreflexion (engl. specular reflection) wird durch das Snelliussche Gesetz beschrieben, bei dem das sichtbare Licht, welches unter einem bestimmten Winkel (Einfallswinkel) auf eine nicht absorbierende, glatte Oberfläche trifft, unter demselben Winkel (Ausfallwinkel) reflektiert wird. Beide Winkel bilden mit dem Lot (gedachte Senkrechte auf der Oberfläche) die Einfallsebene. Erreicht wird eine blendfreie Oberfläche dadurch, dass die Oberfläche geeignet aufgeraut wird. Fällt Licht auf eine geeignet aufgeraute Oberfläche, so wird das Licht diffus in unterschiedliche Richtungen gestreut. Unter einer blendfreien Oberfläche im Sinne der vorliegenden Erfindung versteht man eine optische Grenzfläche, bei der die reguläre Reflektion (engl.: specular reflection) vermindert wird, wie es beispielsweise in Becker, M.E. and Neumeier, J., 70.4: Optical Characterization of Scattering Anti-Glare Layers, SID Symposium Digest of Technical Papers, SID, 2011, 42, 1038-1041, beschrieben wird. Die blendfreie Oberfläche kann vorzugsweise aufgeraut sein, wie es beispielsweise in Huckaby, D.K.P. & Caims, D.R., 36.2, Quantifying "Sparkle" of Anti-Glare Surfaces, SID Symposium Digest of Technical Papers, 2009, 40, 511-513, beschrieben ist. Sie kann vorzugsweise zusätzlich oder alternativ Mikro- oder Nanopartikel, eingebettet in die Oberflächenschicht, enthalten, wie es beispielsweise in Liu, B.T., Teng, Y.T., A novel method to control inner and outer haze of an anti-glare film by surface modification of light-scattering particles, Journal of Colloid and Interface Science, 2010, 350, 421-426, beschrieben worden ist. Zusätzlich oder alternativ zu der aufgerauten oder Partikel enthaltenden Oberfläche kann die mindestens eine Oberfläche der Folie gemäß der vorliegenden Erfindung durch eingeprägte Mikro- oder Nanostrukturen blendfrei ausgestaltet sein, wie es beispielsweise in Boerner, V., Abbott, S. Bläsi, B., Gombert, A., Hoßfeld, W., 7.3, Blackwell Publishing Ltd., 2003, 34, 68-71, beschrieben worden ist. Zusätzlich oder alternativ dazu kann Blendfreiheit der mindestens einen Oberfläche gemäß der vorliegenden Erfindung durch eine Phasenseparation in der Oberfläche erreicht werden, wie es beispielsweise in Stefan Walheim, Erik Schäffer, Jürgen Mlynek, Ullrich Steiner, Nanophase-Separated Polymer Films as High-Performance Antireflection Coatings, Science, 1999, 283, 520-522, beschrieben worden ist. Auf den Inhalt der zitierten Textstellen wird Bezug genommen und so deren Offenbarung hier mit einbezogen.

Generell umfasst die blendfreie Ausgestaltung der vorliegenden Erfindung besonders bevorzugt eine Mikrostrukturierung der erfindungsgemäß zu beschichtenden Oberfläche der Folie und insbesondere die Mikrostrukturierung der beschichteten Oberfläche der erfindungsgemäßen Folie. Als Definition der Mikrostrukturierung im Sinne der vorliegenden Erfindung eignet sich vorteilhafterweise der Begriff der Rauheit, wie er in der DIN EN ISO 4287 verwendet wird. Gemäß DIN EN ISO 4287 ist die Rauheit einer Oberfläche durch die Parameter Ra und Rz definiert. Ra ist der arithmetische Mittelwert der absoluten Werte der Profilabweichungen innerhalb der Bezugsstrecke. Rz ist das arithmetische Mittel aus den größten Einzelrautiefen mehrerer aneinandergrenzenden Einzelmessstrecken. Im folgenden wird der nach DIN EN ISO 4287 reproduzierbar zu ermittelnde Parameter Rz zur Definition der Rauheit und damit der Mikrostrukturierung der Folienoberfläche verwendet werden.

Das erfindungsgemäße Konzept basiert auf der Rauheit der oberen Fläche der Beschichtung, welche durch die vorgegebene Rauheit des zu beschichtenden Substrates zustande kommt. Es wurde gefunden, dass eine blendfreie Ausgestaltung der mindestens einen Oberfläche der erfindungsgemäßen beschichteten Folie besonders vorteilhaft dann erreicht werden kann, wenn die mindestens eine Oberfläche der unbeschichteten Folie eine Rautiefe Rz gemäß DIN EN ISO 4287 im Bereich von ≥ 500 und ≤ 4000 nm bevorzugt im Bereich ≥ 700 und ≤ 3600 nm, besonders bevorzugt im Bereich von ≥ 800 und ≤ 1500 nm, alternativ im Bereich von ≥ 2000 und ≤ 3800, bevorzug im Bereich ≥ 2500 und ≤ 3600 nm aufweist.

So haben die im Rahmen der vorliegenden Erfindung besonders vorteilhaft einzusetzenden auf einer Seite blendfrei ausgestalteten Folien des Typs Makrofol 1-M (Bayer) bzw. Makrofol 1-4 (Bayer) eine mittlere Rautiefe Rz nach DIN EN ISO 4287 im Bereich von 800 bis 1300 nm bzw. im Bereich von 2800 bis 3500 nm auf der blendfreien Seite.

In einer besonders bevorzugten Ausführungsform der vorliegenden Erfindung ist die Mikrostrukturierung der noch unbeschichteten, blendfreien, mindestens einen Folienoberfläche durch eine Rautiefe Rz gemäß DIN EN ISO 4287 im Bereich von ≥ 650 und ≤ 4000 nm gekennzeichnet, bevorzugt im Bereich ≥ 700 und ≤ 3600 nm, besonders bevorzugt im Bereich von ≥ 800 und ≤ 1500 nm, alternativ im Bereich ≥ 2000 und ≤ 3800, bevorzugt ≥ 2500 und ≤ 3600 nm.

Eine besondere Herausforderung für den Fachmann bestand darin, die Oberfläche einer so blendfrei ausgestalten Folie so zu beschichten, dass zum einen eine gewisse Kratzfestigkeit und Lösemittelbeständigkeit erreicht wird, die Blendfreiheit aber beibehalten wird. Es wurde gefunden, dass dieses Ziel erreicht werden kann mit einer Beschichtung , umfassend eine Zusammensetzung, umfassend mindestens ein thermoplastisches Polymer in einem Gehalt von mindestens 30 Gew.-% des Festanteils des Beschichtungsmittels; mindestens einen UV-härtbaren Reaktivverdünner in einem Gehalt von mindestens 30 Gew.-% des Festanteils des Beschichtungsmittels; mindestens einen Fotoinitiator in einem Gehalt von ≥ 0,1 bis ≤ 10 Gewichtsteilen des Festanteils des Beschichtungsmittels; mindestens ein organischen Lösungsmittel wobei die Beschichtung eine Schichtdicke im Bereich von ≥ 2 µm und ≤ 20 µm aufweist und der Feststoffgehalt des Beschichtungsmittels im Bereich von ≥ 0 bis ≤ 40 Gew.-%, gemessen am Gesamtgewicht des Beschichtungsmittels, liegt. Die Beschichtung der blendfrei ausgestalteten Seite der erfindungsgemäßen Folie zeichnet sich nach dem Auftragen auf die Folie und anschließender Trocknung durch eine gute Blockfestigkeit und nach dem Härten durch aktinische Strahlung durch eine ebenfalls gute Lösungsmittelbeständigkeit sowie durch hohe Kratzfestigkeit aus. Die Blendfreiheit der blendfreien Oberfläche der Folie bleibt dann erhalten, wenn die erfindungsgemäße Beschichtung eine Schichtdicke im Bereich von ≥ 2 µm und ≤ 20 µm aufweist.

Das erfindungsgemäß aufzutragende Beschichtungsmittel ist viskos, dabei steigt die Viskosität rapide sehr hoch an, wenn das Lösungsmittel beim Trocken nach dem Auftragen verschwindet. Somit ist die getrocknete Beschichtung sofort auf der mikrostrukturierten Oberfläche fixiert. Es ist keine Migration, Abrutschen oder Abfließen von den Höhen zu den Tiefen der Mikrostruktur mehr möglich. Der Feststoffgehalt des Beschichtungsmittels ist trotz der hohen Viskosität niedrig, bevorzugt im Bereich von ≥ 5 Gew.-% bis ≤ 40 Gew.-%, besonders bevorzugt ≥ 10 Gew.-% bis ≤ 30 Gew.-%, und ganz besonders bevorzugt ≥ 15 Gew.-% bis ≤ 25 Gew.-%. Dieses erlaubt im Zusammenspiel mit der beim Trocknen sich schnell steigernden Viskosität eine dünne und relativ gleichmäßige Abdeckung der Höhen und Tiefen der Mikrostruktur der blendfreien Ausgestaltung der Folienoberfläche.

Generell wird die mikrostrukturierte, blendfreie Oberfläche der Folie durch ein Auftragen der erfindungsgemäßen Beschichtung glatter und klarer. Die Rauheit der resultierenden Beschichtung nimmt mit der effektiven Schichtstärke der Beschichtung ab, so dass die Folie ab einem gewissen Wert der Rauheit nicht mehr als blendfrei, sondern als glänzend in Erscheinung tritt.

Eine scharfe Grenze zwischen blendfreier und glänzender Erscheinung gibt es nach derzeitigem Stand der Technik nicht, weder nach Rauheitswerten noch nach anderen optischen Parametern. Es ist stark von den Herstellungsmethoden und Anwendungen abhängig. Zwei weitere optische Parameter, die zur Definition dieser Grenze in Betracht kommen, sind der Reflexionsgrad Rs (60°-Geometrie) und das Haze.

Eine wichtige, charakteristische Größe für Antiglare-Filme ist der aus einer optischen Streumessmethode gewonnene Haze gemäß ASTM-D1003. Hierin wird die in Transmission gemessene Streuung mit einem Streuwinkel größer 2,5° detektiert und bezüglich der gesamt transmittierten Intensität normiert. Das Zusammenbringen von Reflexionsgrad und Haze-Werten ergibt eine plausible Grenze für ein blendfreies Erscheinungsbild von weniger als 70±10 GU (Rs) und mehr als 6±2 % (Haze). In einer weiteren bevorzugten Ausführungsform der vorliegenden Erfindung beträgt der Glanzwert der Beschichtung nach ASTM-D2457 bei 60° GU ≤ 80.

Die beschichteten erfindungsgemäßen Folien sind insbesondere dann blendfrei, wenn sie nach Beschichtung und Härtung der Beschichtung eine Rauheit Rz gemäß DIN EN ISO 4287 von mindestens 600 nm aufweisen. Dabei versteht sich, dass der Rz-Wert der beschichteten Folienoberfläche nicht höher sein kann als der Rz-Wert der entsprechenden unbeschichteten blendfreien Folienoberfläche. Geht man vom Fall der bevorzugten Folien aus, die ohne die Beschichtung vorzugsweise eine Rautiefe Rz gemäß DIN EN ISO 4287 im Bereich von ≥ 650 und ≤ 4000 nm aufweisen, dann hat auch die erfindungsgemäße beschichtete Folienoberfläche eine maximale Rauheit Rz in diesem Bereich bzw. in den oben erwähnten bevorzugten Bereichen gemäß der vorliegenden Erfindung. In einer besonders bevorzugten Ausführungsform der vorliegenden Erfindung weisen die beschichteten Folien eine Rauheit Rz gemäß DIN EN ISO 4287 von mindestens 600 nm auf.

Es wurde gefunden, dass eine erfindungsgemäße beschichtete Folie ab einer Beschichtungsdicke von 2 µm im Vergleich zur unbeschichteten Folie eine deutliche Verbesserung bei der Kratzfestigkeit und Beständigkeit gegenüber Lösungsmitteln aufweist. Daher beträgt die Schichtdicke des Beschichtungsmittels der erfindungsgemäßen Folien bevorzugt mindestens 2 µm und besonders bevorzugt mindestens 4 µm. Bei einer Schichtdicke der Beschichtung von mehr als 20 µm dagegen fällt die Rauheit unter die bevorzugten Werte, die Folienoberflächen erscheinen damit nicht mehr blendfrei, sondern glänzend. Daher ist die Schichtdicke der Beschichtung der erfindungsgemäßen Folien bevorzugt nicht höher als 20 µm. In einer bevorzugten Ausführungsform liegt die Beschichtung in einer Schichtdicke im Bereich von ≥ 4 µm bis ≤ 12 µm oder im Bereich von ≥ 2 µm bis ≤ 18 µm. So ist insbesondere eine Schichtdicke der erfindungsgemäßen Beschichtung im Bereich von ≥ 4 µm bis ≤ 12 µm besonderes vorteilhaft auf der blendfreien Oberfläche einer Folie mit einer Rauheit Rz im Bereich von 800 bis 1300 nm wie beispielsweise des Typs Makrofol 1-M (Bayer). Eine Schichtdicke der erfindungsgemäßen Beschichtung im Bereich von ≥ 2 µm bis ≤ 18 µm kann insbesondere besonders vorteilhaft auf einer Oberfläche einer Folie mit einer Rauheit Rz im Bereich von 2800 bis 3500 nm wie beispielsweise des Typs Makrofol 1-4 (Bayer) sein, um eine blendfreie und dabei kratzfeste und lösemittelbeständige Oberfläche zu erhalten.

Weitere optische Kenngrößen, nach denen eine anwendungsrelevante blendfreie Folie charakterisiert werden kann, sind die 'Abbildungsschärfe' (engl. Distinctness-of-Image (DOI; Messmethode ASTM-D5767), die Modulations-Transfer-Funktion (engl. Modulation transfer function (MTF). Letztere ist als das Verhältnis der Kontraste des Bildes und des Objektes definiert. Hinzu kommt eine Beurteilung über den Glitzereffekt (engl *sparkle*; siehe Becker, M. E. & Neumeier, J.; 70.4: Optical Characterization of Scattering Anti-Glare Layers in SID Symposium Digest of Technical Papers, SID, 2011, 42, 1038-1041). Gemäß der Definition für den *Sparkle-*Wert (s=σ/µ; d.h. das Verhältnis Varianz (σ) zum Mittelwert (µ) der Intensitätsverteilung des Displays mit Antiglare-Film) werden kleine Werte angestrebt. Für den DOI bzw. MTF Wert sind große Werte (→ 100%) ein Entwicklungsziel.

In weiteren bevorzugten Ausführungsformen der vorliegenden Erfindung weisen die beschichteten Folien DOI/MTF-Werte von größer 97 % auf. Besonders bevorzugte beschichtete Folien gemäß der vorliegenden Erfindung weisen somit mindestens eine beschichtete Oberfläche mit einem Rz gemäß DIN EN ISO 4287 von mindestens 600 nm und einem Glanzwert nach ASTM-D2457 bei 60° GU ≤ 80 auf, bevorzugt in Kombination mit DOI/MTF-Werten von größer 97 %.

Die Beschichtung der mindestens einen blendfreien Oberfläche der erfindungsgemäßen Folie ist erhältlich durch Beschichten mit einem Beschichtungsmittel gemäß mindestens einem der Ansprüche 1 bis 4, umfassend
(a) mindestens ein thermoplastisches Polymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel,
wobei der Feststoffgehalt des Beschichtungsmittels im Bereich von ≥ 0 bis ≤ 40 Gew.-% bevorzugt im Bereich von ≥ 5 Gew.-% bis ≤ 40 Gew.-%, besonders bevorzugt ≥ 10 Gew.-% bis ≤ 30 Gew.-%, und ganz besonders bevorzugt ≥ 15 Gew.-% bis ≤ 25 Gew.-%, gemessen am Gesamtgewicht des Beschichtungsmittels, liegt, und wobei der Anteil an ethylenisch ungesättigten Gruppen mindestens 3 mol pro kg des Festanteils des Beschichtungsmittels beträgt.

Das Beschichtungsmittel stellt damit einen weiteren Gegenstand der vorliegenden Erfindung dar.

Die Vicaterweichungstemperaturen VET (ISO 306) des mindestens einen thermoplastischen Polymers der Beschichtung gemäß der vorliegenden Erfindung liegen in einer bevorzugten Ausführungsform der vorliegenden Erfindung im Bereich von mindestens 90°C, bevorzugt mindestens 95°C, besonders bevorzugt mindestens 100°C.

Es hat sich erwiesen, dass die Oberfläche der Beschichtung insbesondere dann besonders kratzfest und lösemittelbeständig ist, wenn das mindestens eine thermoplastische Polymer ein mittleres Molgewicht Mw von mindestens 100.000 g/mol aufweist. In einer bevorzugten Ausführungsform der vorliegenden Erfindung weist das thermoplastische Polymer ein mittleres Molgewicht Mw von mindestens 100.000 g/mol, bevorzugt von mindestens 150.000, besonders bevorzugt von mindestens 200.000 g/mol auf.

Thermoplastische Polymere im Sinne der vorliegenden Erfindung sind insbesondere Polymethylmethacrylat (PMMA), Polyester verschiedener Art (z.B. PET, PEN, PBTP und UP), andere Kunststoffe, wie Hart-PVC, Celluloseestern (wie CA, CAB, CP), Polystyrol (PS) und Copolymere (SAN, SB und MBS), Polyacrylnitril (PAN), ABS-Kunststoffe, Acrylnitrilmethylmethacrylat (AMMA), Acrylnitril-Styrol-Acrylester (ASA), Polyurethan (PUR), Polyethylen (PE, PE-HD, -LD, -LLD, -C), Polypropylen (PP), Polyamid (PA), Polycarbonat (PC) oder Polyethersulfon (PES). Die vorstehenden Kurzbezeichnungen der Polymere und Copolymere sind in DIN 7728T1 definiert.

Besonders vorteilhaft und daher besonders bevorzugt ist Polymethylmethacrylat.

Unter Polymethylmethacrylat (PMMA) versteht man insbesondere Polymethylmethacrylat-Homopolymer und Copolymere auf Methylmethacrylat-Basis mit einem Methylmethacrylat-Anteil von mehr als 70 Gew. %. Solche Polymethylmethacrylate sind beispielsweise unter den Handelsnamen *Degalan*®, *Degacryl*®, *Plexyglas*®, *Acrylite*® (Hersteller Evonik), *Altuglas*, *Oroglas* (Hersteller Arkema), *Elvacite*®, *Colacryl*®, *Lucite*® (Hersteller Lucite) und u.a. unter den Namen *Acrylglas*, *Conacryl*, *Deglas*, *Diakon*, *Friacryl*, *Hesaglas*, *Limacryl*, *PerClax* und *Vitroflex* erhältlich.

Bevorzugt sind in einer weiteren vorteilhaften Ausführungsform PMMA-Homopolymere und/oder Copolymere aus 70 Gew.-% bis 99,5 Gew.-% Methylmethacrylat und 0,5 Gew.-% bis 30 Gew.-% Methylacrylat. Besonders bevorzugt sind PMMA-Homopolymere und Copolymere aus 90 Gew.-% bis 99,5 Gew.-% Methylmethacrylat und 0,5 Gew.-% bis 30 Gew.-% Methylacrylat. Die Vicaterweichungstemperaturen VET (ISO 306) dieser bevorzugten PMMA-Homopolymere und/oder Copolymere können im Bereich von mindestens 90°C, bevorzugt von ≥ 100°C bis ≤ 115°C liegen.

Besonders bevorzugt sind PMMA-Homopolymere und Copolymere mit einem Molekulargewicht Mw von mindestens 100.000 g/mol, besonders bevorzugt von mindestens 150.000 g/mol, ganz besonders von mindestens 200.000 g/mol.

Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Das Polymer ist ein wesentlicher Teil des erfindungsgemäßen Beschichtungsmittels und der erfindungsgemäßen Beschichtung. Der Anteil des thermoplastischen Polymers beträgt im Festanteil des Beschichtungsmittels mindestens 30 Gew.-%. Besonders bevorzugt sind mindestens 40 Gew.-%, ganz besonders bevorzugt sind mindestens 45 Gew.-%

Als Komponente (b) des erfindungsgemäßen Beschichtungsmittel sind als Reaktivverdünner bifunktionelle, trifunktionelle, tetrafunktionelle, pentafunktionelle oder hexafunktionelle Acryl-und/oder Methacrylmonomere bevorzugt einsetzbar. Vorzugsweise handelt es sich um Esterfunktionen, insbesondere Acrylesterfunktionen. Geeignete mehrfunktionelle Acryl- und/oder Methacrylsäureester leiten sich von aliphatischen Polyhydroxyverbindungen mit wenigstens 2, vorzugsweise wenigstens 3 und besonders bevorzugt wenigstens 4 Hydroxygruppen und vorzugsweise 2 bis 12 Kohlenstoffatomen ab.

Beispiele solcher aliphatischen Polyhydroxyverbindungen sind Ethylenglykol, Propylenglykol, Butandiol-1,4, Hexandiol-1,6, Diethylenglykol, Triethylenglykol, Glycerin, Trimethylolpropan, Pentaerythrit, Dipentaerythrit, Tetramethylolethan und Sorbitan. Beispiele für sich als Reaktivverdünner erfindungsgemäß bevorzugt eignende Ester sind Glykoldiacrylat und -dimethacrylat, Butandioldiacrylat oder -dimethacrylat, Dimethylolpropandiacrylat oder -dimethacrylat, Diethylenglykoldiacrylat oder -dimethacrylat, Divinylbenzol, Trimethylolpropantriacrylat oder -trimethacrylat, Glycerintriacrylat oder -trimethacrylat, Pentaerythrittetraacrylat oder -tetramethacrylat, Dipentaerythritpenta/hexaacrylat (DPHA),1,2,3,4-Butantetraoltetraacrylat oder -tetramethacrylat, Tetramethylolethantetraacrylat oder -tetramethacrylat, 2,2-Dihydroxy-propandiol-1,3-tetraacrylat oder -tetramethacrylat, Diurethandimethacrylat (UDMA), Sorbitantetra-, -penta- oder -hexa-acrylat oder die entsprechenden Methacrylate. Es können auch Gemische von vernetzenden Monomeren mit zwei bis vier oder mehr ethylenisch ungesättigten, radikalisch polymerisierbaren Gruppen mitverwendet werden.

Weiter erfindungsgemäß als Reaktivverdünner bzw. als Komponente b) des erfindungsgemäßen Beschichtungsmittels können alkoxylierte Di-, Tri-, Tetra-, Penta- und Hexacrylate oder -methacrylate verwendet werden. Beispiele für alkoxylierte Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat. Beispiele für alkoxylierte Triacrylate oder -methacrylate sind alkoxyliertes, bevorzugt ethoxyliertes Pentaerythrit-Triacrylat, Pentaerythrit-Trimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Beispiele für alkoxylierte Tetra-, Penta- oder Hexaacrylate sind alkoxyliertes, bevorzugt ethoxyliertes Pentaerythrit-Tetraacrylat, Dipentaerythrit-Tetraacrylat, Dipentaerythrit-Pentaacrylat Dipentaerythrit-Hexaacrylat, Pentaerythrit-Tetramethacrylat, Dipentaerythrit-Tetramethacrylat, Dipentaerythrit-Pentamethacrylat oder Dipentaerythrit-Hexamethacrylat.

In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente b) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat-oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Ebenso erfindungsgemäß als Reaktivverdünner bzw. als Komponente b) des erfindungsgemäßen Beschichtungsmittels können Oligomere dienen, die zur Klasse der aliphatischen Urethanacrylate beziehungsweise der Polyesteracrylate oder Polyacrylacrylate gehören. Deren Verwendung als Lackbindemittel ist bekannt und ist in Chemistry & Technology of UV & EB Formulation for Coatings, Inks & Paints, Vol. 2, 1991, SITA Technology, London (P.K.T: Oldring (Ed.) auf S.73-123 (Urethane Acrylates) bzw. S.123-135 (Polyester Acrylates) beschrieben. Kommerziell erhältlich und geeignet im erfindungsgemäßen Sinne sind hier beispielsweise aliphatische Urethanacrylate wie Ebecryl® 4858, Ebecryl® 284, Ebecryl® 265, Ebecryl® 264, Ebecryl® 8465, Ebecryl® 8402 (Hersteller jeweils Cytec Surface Specialities), Craynor® 925 von Cray Valley, Viaktin® 6160 von Vianova Resin, Desmolux VP LS 2265 von Bayer MaterialScience AG, Photomer 6891 von Cognis oder auch in Reaktivverdünnern gelöste aliphatische Urethanacrylate wie Laromer® 8987 (70%ig in Hexandioldiacrylat) von BASF AG, Desmolux U 680 H (80%ig in Hexandioldiacrylat) von Bayer MaterialScience AG, Craynor® 945B85 (85% in Hexandioldiacrylat), Ebecryl® 294/25HD (75% in Hexandioldiacrylat), Ebecryl® 8405 (80% in Hexandioldiacrylat), Ebecryl® 4820 (65% in Hexandioldiacrylat) (Hersteller jeweils Cytec Surface Specialities) und Craynor® 963B80 (80% in Hexandioldiacrylat) jeweils von Cray Valley oder auch Polyesteracrylate wie Ebecryl® 810, 830 oder Polyacrylacrylate wie Ebecryl®, 740, 745, 767 oder 1200 von Cytec Surface Specialities.

In einer weiteren bevorzugten Ausführungsform umfasst der Reaktivverdünner (b) alkoxylierte Diacrylate und/oder Dimethacrylate, alkoxylierte Triacrylate und/oder Trimethacrylate, alkoxylierte Tetraacrylate und/oder Tetramethacrylate, alkoxylierte Pentaaacrylate und/oder Pentamethacrylate, alkoxylierte Hexaacrylate und/oder Hexamethacrylate, aliphatische Urethanacrylate, Polyesteracrylate, Polyacrylacrylate und Gemische davon.

Auch erfindungsgemäß sind Gemische solch vernetzender multifunktioneller Monomere und monofunktioneller Monomere (wie z.B Methylmethacrylat). Der Anteil der multifunktionellen Monomere in einem solchen Gemisch soll nicht unter 20 Gew.-% liegen.

Die Komponente (b) ist ein wesentlicher Teil des erfindungsgemäßen Beschichtungsmittels und der erfindungsgemäßen Beschichtung. Der Anteil der Komponente (b) insgesamt beträgt im Festanteil des Beschichtungsmittels mindestens 30 Gew.-%. Besonders bevorzugt sind mindestens 40 Gew.-%, ganz besonders bevorzugt sind mindestens 45 Gew.-%

Der Gehalt an ethylenisch ungesättigten Gruppen hat wesentlichen Einfluss auf die erreichbaren Beständigkeitseigenschaften der mit Strahlung gehärteten Beschichtung. Daher enthält das erfindungsgemäße Beschichtungsmittel bevorzugt einen Gehalt an ethylenisch ungesättigten Gruppen von mindestens 3,0 mol pro kg Festgehalt des Beschichtungsmittels, besonders bevorzugt von mindestens 3,5 mol pro kg, ganz besonders bevorzugt mindestens 4,0 mol pro kg Festgehalt des Beschichtungsmittels. Dieser Gehalt an ethylenisch ungesättigten Gruppen ist dem Fachmann auch unter dem Begriff der Doppelbindungsdichte wohlbekannt.

Unter den Fotoinitiatoren der vorliegenden Erfindung versteht man die gängigen, kommerziell erhältlichen Verbindungen wie z. B. α-Hydroxyketone, Benzophenon, α,α-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere, wobei die genannten Fotoinitiatoren allein oder in Kombination von zwei oder mehreren oder in Kombination mit einem der obigen Polymerisationsinitiatoren benutzt werden können.

Als UV-Fotoinitiatoren werden beispielsweise die IRGACURE®-Typen von BASF eingesetzt, so beispielsweise die Typen IRGACURE® 184, IRGACURE® 500, IRGACURE® 1173, IRGACURE®2959, IRGACURE® 745, IRGACURE® 651, IRGACURE® 369, IRGACURE® 907, IRGACURE® 1000, IRGACURE® 1300, IRGACURE® 819, IRGACURE® 819DW, IRGACURE® 2022, IRGACURE® 2100, IRGACURE® 784, IRGACURE® 250, ferner werden die DAROCUR®-Typen von BASF eingesetzt, so beispielsweise die Typen DAROCUR® MBF, DAROCUR® 1173, DAROCUR® TPO, DAROCUR® 4265 eingesetzt. U.a. werden die weiteren UV-Photoinitiatoren eingesetzt, z.B. Esacure One (Hersteller Lamberti).

Fotoinitiatoren sind mit ≥ 0,1 bis ≤ 10 Gewichtsteilen im Festanteil des erfindungsgemäßen Beschichtungsmittels enthalten.

Das Beschichtungsmittel kann zudem über den Festanteil der 100 Gew.-Teile der Komponenten a) bis c) hinaus ein oder mehrere organische Lösungsmittel enthalten. Solche organischen Lösungsmittel können beispielsweise ausgewählt sein aus der Gruppe enthaltend aromatische Lösemittel, wie z.B. Xylol oder Toluol, Ketone, wie z.B. Aceton, 2-Butanon, Methylisobutylketon, Diacetonalkohol, Alkohole, wie z.B. Methanol, Ethanol, i-Propanol, Butanol,1-Methoxy-2-propanol, Ether, wie z.B. 1,4-Dioxan, Ethylenglykol-n-propylether, oder Ester, wie z.B. Essigsäureethylester, Essigsäurebutylester, 1-Methoxy-2-propylacetat oder Mischungen enthaltend diese Lösemittel.

Bevorzugt sind Ethanol, i-Propanol, Butanol, Essigsäureethylester, Essigsäurebutylester, 1-Methoxy-2-propanol, Diacetonalkohol, Xylol oder Toluol sowie Gemischen davon. Besonders bevorzugt sind i-Propanol, Butanol, Essigsäureethylester, Essigsäurebutylester, 1-Methoxy-2-propanol, Diacetonalkohol und deren Gemische. Ganz besonders bevorzugt sind 1-Methoxy-2-propanol und Diacetonalkohol. Besonders hervorzuheben und damit bevorzugt ist hierbei 1-Methoxy-2-propanol, da es vorteilhafterweise sich gegenüber Polycarbonat völlig neutral verhält und der mittleren Rauheit Rz der blendfrei ausgestalteten Oberfläche nicht schadet.

Das Beschichtungsmittel der vorliegenden Erfindung enthält bevorzugt zusätzlich zu dem Festanteil mit den 100 Gew.-Teilen der Komponenten a) bis c) 0 bis 900 Gew.-Teile, besonders bevorzugt 100 bis 850 Gew.-Teile, ganz besonders bevorzugt 200 bis 800 Gew.-Teile wenigstens eines organischen Lösungsmittels.

In einer ganz besonders bevorzugten Ausführungsform der vorliegenden Erfindung umfasst die erfindungsgemäße beschichtete blendfreie Folie eine transparente Polycarbonat-Folie mit einer Mikrostrukturierung der beschichteten Oberfläche mit einem Rz im Bereich von ≥ 800 bis ≤ 1300 nm oder von ≥ 2800 bis ≤ 3500 nm und einer Beschichtung, erhältlich durch Beschichten mit einem Beschichtungsmittel, umfassend 45 bis 50 Gew.-% mindestens eines linearen PMMA-Copolymers mit einer mittleren Molmasse von mindestens 100.000 g/mol; 45 bis 50 Gew.-% mindestens eines Reaktivverdünners, insbesondere Dipentaerythrol penta/hexa-acrylat; 0,1 bis 10 Gewichtsteilen mindestens eines Fotoinitiators; und 1-Methoxy-2-propanol als organisches Lösungsmittel, wobei das Beschichtungsmittel einen Gehalt an ethylenisch ungesättigten Gruppen von 4,5 bis 5,5 mol pro kg des Festanteils des Beschichtungsmittels sowie einen Feststoffgehalt im Bereich von 15 bis 25 Gew.-% aufweist und die Beschichtung eine Rauheit Rz im Bereich ≥ 600 und ≤ 1300 nm aufweist und der Glanzwert GU der beschichteten blendfreien Oberfläche nach ASTM-D2457 bei 60° kleiner gleich 80 beträgt.

Das Beschichtungsmittel gemäß der vorliegenden Erfindung kann zudem über die 100 Gew.-Teile der Komponenten a) bis c) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, UV-Absorber, IR-Absorber, bevorzugt aus der Gruppe enthaltend Stabilisatoren, Verlaufsmittel, Oberflächenadditive und anorganische Nanopartikel. Das Beschichtungsmittel gemäß der vorliegenden Erfindung kann in bevorzugten Ausführungsformen zusätzlich zu den 100 Gew.-Teilen der Komponenten a) bis c) ≥ 0 bis ≤ 35 Gew.-Teile, besonders bevorzugt ≥ 0 bis ≤ 30 Gew.-Teile, ganz besonders bevorzugt ≥ 0,1 bis ≤ 20 Gew.-Teile wenigstens eines weiteren Lackadditivs enthalten. Bevorzugt beträgt der Gesamtanteil aller in der Lackzusammensetzung enthaltenen Lackadditive ≥ 0 bis ≤ 35 Gew.-Teile, besonders bevorzugt ≥ 0 bis ≤ 30 Gew.-Teile, ganz besonders bevorzugt ≥ 0,1 bis ≤ 20 Gew.-Teile.

Das Beschichtungsmittel kann anorganische Nanopartikel zur Erhöhung der mechanischen Beständigkeit, wie z.B. Kratzfestigkeit und/oder Bleistifthärte enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Das Beschichtungsmittel kann auf einfache Weise hergestellt werden, indem das Polymer in dem Lösemittel bei Raumtemperatur oder bei erhöhten Temperaturen vorerst komplett gelöst wird und dann der bis Raumtemperatur abgekühlten Lösung die anderen obligatorischen und gegebenenfalls die optionalen Komponenten entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Fotoinitiator in dem oder den Lösungsmitteln gelöst und anschließend die weiteren Komponenten hinzugegeben. Gegebenenfalls erfolgt anschließend noch eine Reinigung mittels Filtration, vorzugsweise mittels Feinfiltration.

Ein weiterer Gegenstand der vorliegenden gemäß Anspruch 10 ist daher ein Verfahren zur Herstellung einer beschichteten Folie, umfassend die Schritte
(i) Bereitstellen einer Folie mit mindestens einer blendfreien Oberfläche der Folie;
(ii) Beschichten der Folie auf der Seite der blendfreien Oberfläche mit einem Beschichtungsmittel, umfassend
   (a) mindestens ein thermoplastisches Polymer in einem Gehalt von mindestens 30 Gew.-% des Festanteils des Beschichtungsmittels;
   (b) mindestens einen UV-härtbaren Reaktivverdünner in einem Gehalt von mindestens 30 Gew.-% des Festanteils des Beschichtungsmittels;
   (c) mindestens einen Fotoinitiator in einem Gehalt von ≥ 0,1 bis ≤ 10 Gewichtsteilen des Festanteils des Beschichtungsmittels; und
   (d) mindestens ein organisches Lösungsmittel;
   wobei die Beschichtung eine Schichtdicke im Bereich von ≥ 2 µm und ≤ 20 µm aufweist und der Feststoffgehalt des Beschichtungsmittels im Bereich von ≥ 0 bis ≤ 40 Gew.-%, gemessen am Gesamtgewicht des Beschichtungsmittels, liegt, und wobei der Anteil an ethylenisch ungesättigten Gruppen mindestens 3 mol pro kg des Festanteils des Beschichtungsmittels beträgt.
(iii) Trocknen der Beschichtung;
(iv) gegebenenfalls zurechtschneiden, dekaschieren, bedrucken und/oder thermisches oder mechanisches Verformen der Folie; und
(v) Bestrahlen der Beschichtung mit aktinischer Strahlung, dabei Härten der Beschichtung.

Das Beschichten der Folie mit dem Beschichtungsmittel kann dabei nach den gängigen Verfahren der Beschichtung von Folien mit flüssigen Beschichtungsmitteln erfolgen, wie beispielsweise durch Rakeln, Spritzen, Gießen, Fluten, Tauchen, Sprühen, Aufwalzen oder Aufschleudern. Das Flutverfahren kann manuell mit Schlauch oder geeignetem Beschichtungskopf oder automatisch im Durchlauf über Flutlackierroboter- und gegebenenfalls Schlitzdüsen erfolgen. Bevorzugt wird eine Auftragung des Beschichtungsmittels über eine Übertragung Rolle auf Rolle. Die Oberfläche der zu beschichtenden Folie kann dabei durch Reinigung oder Aktivierung vorbehandelt sein.

Das Trocknen schließt sich an die Applikation des Beschichtungsmittels auf das Substrat, bevorzugt eine Folie, an. Hierzu wird insbesondere mit erhöhten Temperaturen in Öfen und mit bewegter und gegebenenfalls auch entfeuchteter Luft wie beispielsweise in Konvektionsöfen oder mittels Düsentrocknern sowie Wärmestrahlung wie IR und/oder NIR gearbeitet. Weiterhin können Mikrowellen zum Einsatz kommen. Es ist möglich und vorteilhaft, mehrere dieser Trocknungsverfahren zu kombinieren. Das Trocknen der Beschichtung im Schritt (ii) umfasst bevorzugt das Ablüften bei Raumtemperatur und/oder erhöhter Temperatur, wie vorzugsweise bei 20 - 200 °C, besonders bevorzugt bei 40 - 120 °C. Nach dem Trocknen der Beschichtung ist diese blockfest, so dass die beschichtete Folie kaschiert, bedruckt, und/oder thermisch verformt werden kann. Insbesondere das Verformen ist dabei bevorzugt, da hier schon die Form für ein film insert molding-Verfahren zur Herstellung eines dreidimensionalen Kunststoffteils vorgegeben werden kann.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

In einer bevorzugten Ausführungsform ist die aktinische Strahlung daher Licht im Bereich des UV-Lichtes.

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglichst wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gewichts-% bis ≤ 10 Gewichts-%, besonders bevorzugt von ≥ 0,2 Gewichts-% bis ≤ 3,0 Gewichts-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² eingesetzt.

Die resultierende gehärtete, beschichtete und gegebenenfalls verformte Folie zeigt sehr gute Beständigkeiten gegenüber Lösungsmittel, färbenden Flüssigkeiten, wie sie im Haushalt vorkommen sowie hohe Härte, gute Kratz- und Abriebbeständigkeiten bei hoher optischer Transparenz und Blendfreiheit.

Die Folie oder auch Platte wird bevorzugt in einer Dicke von ≥ 10 µm bis ≤ 1500 µm, mehr bevorzugt von ≥ 50 µm bis ≤ 1000 µm und besonders bevorzugt von ≥ 200 µm bis ≤ 400 µm verwendet. Zusätzlich kann das Material der Folie Additive und/oder Prozesshilfsmittel zur Folienherstellung enthalten, wie zum Beispiel Stabilisatoren, Lichtschutzmittel, Weichmacher, Füllstoffe wie Fasern und Farbstoffe enthalten.

In einer Ausführungsform ist die Folie eine Polycarbonatfolie mit einer Dicke von ≥ 10 µm bis ≤ 1500 µm. Hierunter ist ebenfalls eine Polycarbonatfolie mit den vorgenannten Additiven und/oder Prozesshilfsmitteln eingeschlossen. Die Dicke der Folie kann auch ≥ 50 µm bis ≤ 1000 µm oder ≥ 200 µm bis ≤ 400 µm betragen.

Die Folie kann ein- oder beidseitig beschichtet sein, wobei das einseitige Beschichten bevorzugt wird. Im Falle einseitiger Beschichtung kann auf der Rückseite der Folie, also auf der Oberfläche, auf der das Beschichtungsmittel nicht aufgebracht wird, optional eine thermisch verformbare Klebstoffschicht aufgebracht sein. Hierzu eignen sich je nach Vorgehensweise bevorzugt Schmelzklebstoffe oder strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein sollten.

Aufgrund der erwähnten hervorragenden Eigenschaften eignet sich die erfindungsgemäße beschichtete Folie für den Einsatz in Erzeugnissen in vielen Gebieten der Technik, insbesondere in solchen, in denen eine blendfreie, zumindest nicht glänzende Oberfläche mit einer hohen mechanischen und chemischen Beständigkeit gefragt ist. Ein weiterer Gegenstand der vorliegenden Erfindung betrifft daher ein Erzeugnis, umfassend mindestens eine transparente beschichtete Kunststofffolie gemäß der vorliegenden Erfindung, wobei das Erzeugnis ausgewählt ist aus der Gruppe bestehend aus Architekturverscheibungen, wie insbesondere streuende Trennscheiben wie beispielsweise in Badezimmern oder Gewächshäusern, Abdeckscheiben, und Frontscheiben für Displays. Ebenso bevorzugt sind als Erzeugnisse nicht-glänzende Kunststoffteile für Elektrik, Elektronik und Fahrzeuginnenausstattung. In einer bevorzugten Ausführungsform der vorliegenden Erfindung ist dabei das Display ein Display von Computerbildschirmen, Fernsehern, Anzeigegeräten und Mobilfunktelefonen. In einer weiteren bevorzugten Ausführungsform der vorliegenden Erfindung ist das Erzeugnis ein Teil einer Fahrzeuginnenausstattung wie beispielsweise ein Armaturenbrett.

Ein weiterer Gegenstand der vorliegenden Erfindung betrifft die Verwendung der erfindungsgemäßen blendfreien beschichteten Kunststofffolie als hochtransparente blendfreie Frontscheibe für Displays. In einer bevorzugten Ausführungsform der erfindungsgemäßen Verwendung der erfindungsgemäßen beschichten Folie ist das Display ein Display von Computerbildschirmen, Fernsehern, Anzeigegeräten und Mobilfunktelefonen.

### Beispiele:

### Bewertungsmethoden

Die Schichtdicke der Beschichtungen wurde durch Beobachtung der Schnittkante in einem optischem Mikroskop des Typs Axioplan des Herstellers Zeiss gemessen. Methode - Auflicht, Hellfeld, Vergrößerung 500x.

### Bewertung der Bleistifthärte

Die Bleistifthärte wurde analog ASTM D 3363 unter Verwendung eines Elcometer 3086 Scratch boy (Elcometer Instruments GmbH, Aalen, Deutschland) bei einer Belastung von 500 g, wenn nicht anders angegeben, gemessen.

### Bewertung der Stahlwolle-Verkratzung

Die Stahlwolle-Verkratzung wird bestimmt, indem eine Stahlwolle No. 00 (Oskar Weil GmbH Rakso, Lahr, Deutschland) auf das flächige Ende eines 500 g Schlosser-Hammers geklebt wird, wobei die Fläche des Hammers 2,5 cm x 2,5 cm, d.h. ca. 6,25 cm² beträgt. Der Hammer wird ohne zusätzlichen Druck auf die zu prüfende Fläche aufgesetzt, so dass eine definierte Belastung von ca. 560 g erreicht wird. Der Hammer wird dann 10mal in Doppelhüben vor und zurück bewegt. Nachfolgend wird die belastete Oberfläche mit einem weichen Tuch von Geweberückständen und Lackpartikeln gereinigt. Die Verkratzung wird durch Haze- und Glanzwerte charakterisiert, gemessen quer zur Verkratzungsrichtung mit einem Micro HAZE plus (20°-Glanz und Haze; Byk-Gardner GmbH, Geretsried, Deutschland). Die Messung erfolgt vor und nach Verkratzung. Angegeben werden die Differenzwerte bei Glanz und Haze vor und nach Belastung als ΔGlanz und ΔHaze.

### Bewertung der Lösemittelbeständigkeit

Die Lösemittelbeständigkeit der Beschichtungen wurde üblicherweise mit Isopropanol, Xylol, 1-Methoxy-2-propylacetat, Ethylacetat, Aceton in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:
- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennwerten 0 und 1 üblicherweise bestanden. Kennwerte > 1 stehen für ein "nicht bestanden".

### Bewertung der optischen Eigenschaften

Die Transmission, der Haze wurden gemäß ASTM-D2457 mit einem BYK Haze Gard (Firma BYK, Deutschland) bestimmt. Der Glanz wurde gemäß DIN 67530 mit einem BYK micro Tri Gloss (Firma BYK, Deutschland) gemessen. Die Rauheitswerte Ra, Rz wurden gemäß DIN ISO 4287 mit einem Dektak 150 Profiler der Firma Veeco Instruments (USA) bestimmt. Für die Bestimmung der weiteren optischen Parameter Sparkle, DOI/MTF und Rs wurde das SMS 1000 (Sparkle Measurement System) der Firma DM&S (Deutschland) verwendet.

### Beispiel 1: Herstellung des erfindungsgemäßen Beschichtungsmittels

In einem 15L Kessel wurde vorerst Degacryl MW 730 (Copolymerisat auf Basis von PMMA, M_{w}=10⁶; Evonik) in 1-Methoxy-2-propanol bei 100°C (Innentemperatur) wie folgt gelöst: 4500 g 1-Methoxy-2-propanol wurden vorgelegt und unter Rühren wurden 1100 g Degacryl MW 730 eingetragen. Danach wurde mit 2500 g 1-Methoxy-2-propanol nachgespült. Der Lösevorgang dauert ca. 4 Stunden. Es entstand eine homogene klare, farblose, zähflüssige Masse. Der Ansatz wurde nach dem Lösevorgang auf Raumtemperatur abgekühlt. 1100 g Dipentaerythritol penta/hexaacrylat (DPHA HerstellerCytec) wurden separat mit 2500 g 1-Methoxy-2-propanol verdünnt. Bei Raumtemperatur wurde diese Lösung in die Apparatur gegeben und 2 Stunden untergemischt. 44,0 g Irgacure 1000 (BASF), 22,0 g Darocur 4265 (BASF) und 5,5 g BYK 333 (Hersteller BYK) wurden separat mit 400 g 1-Methoxy-2-propanol verdünnt. Bei Homogenität dieser Lösung wurde diese in die Apparatur gegeben und gut untergemischt. Der Ansatz wurde ca. 6 Stunden unter Lichtausschluss gerührt. Ausbeute: 11363 g. Das auf diese Weise erhaltene Beschichtungsmittel hat einen Feststoffgehalt von 17% und eine Viskosität (23°C) bei 9000 mPas. Im Feststoffanteil des Beschichtungsmittel betrug der Anteil des Hochpolymers ebenso wie Anteil des Reaktivverdünners jeweils 48,4 Gew.-%. Der Gehalt der ethylenisch ungesättigten Gruppen pro kg Festgehalt des Beschichtungsmittels betrug ca. 5,2 mol.

### Beispiel 2: Beschichtung einer Folie

Das in Beispiel 1 erhaltene Beschichtungsmittel wurde mittels eines Schlitzgießers auf die strukturierte Seite einer Trägerfolie, wie Makrofol DE 1-M oder Makrofol DE 1-4 (Bayer MaterialScience AG, Leverkusen, Deutschland), aufgetragen.

Typische Antragsbedingungen sind wie folgt:
- Bahngeschwindigkeit 1,3 bis 2,0 m/min
- Nasslackauftrag 20 - 150 µm
- Umlufttrockner 90 - 110 °C, bevorzugt im Bereich der TG des zu trocknenden Polymers.
- Verweilzeit im Trockner 3,5 - 5 min.

Die Beschichtung erfolgte Rolle auf Rolle, das heißt, dass die Polycarbonatfolie in der Beschichtungsanlage abgerollt wurde. Die Folien wurden durch eines der oben genannten Antragsaggregate geführt und mit der Beschichtungslösung beaufschlagt. Danach wurden die Folien mit der nassen Beschichtung durch den Trockner gefahren.

Nach Ausgang aus dem Trockner wurde die jetzt getrocknete Beschichtung üblicherweise der UV-Härtung unterzogen, dann mit einer Kaschierfolie versehen, um sie vor Verschmutzung und Verkratzung zu schützen. Danach wurde die Folie wieder aufgerollt. Die genannten Vorgänge erfolgten kontinuierlich in einer dafür ausgelegten Rolle-zu-Rolle-Beschichtungsanlage.

### Beispiel 3: Beschichtete Folien auf Basis des Substrates Makrofol DE 1-M

Verschiedene 250 µm-starke Folien Makrofol DE 1-M wurden mit dem Beschichtungsmittel aus Beispiel 1 im Verfahren gemäß Beispiel 2 beschichtet. Unterschiedliche Schichtstärken der Beschichtung wurden erzeugt. Dadurch wurden folgende Folienprodukte erhalten (die jeweiligen Schichtstärken sind in den Klammern angegeben): B-3-1 (5µm), B-3-2 (7µm), B-3-3 (18µm), B-3-4 (15µm), B-3-5 (19µm).

### Beispiel 4: Beschichtete Folien auf Basis des Substrates Makrofol DE 1-4

Verschiedene 250 µm-starke Folie Makrofol DE 1-4 wurden mit dem Beschichtungsmittel aus Beispiel 1 im Verfahren gemäß Beispiel 2 beschichtet. Unterschiedliche Schichtstärken der Beschichtung wurden erzeugt. Dadurch wurden folgende Folienprodukte erhalten (die jeweiligen Schichtstärken sind in den Klammern angegeben): B-4-1 (2µm), B-4-2 (4µm), B-4-3 (6µm), B-4-4 (11µm), B-4-5 (15µm) B-4-6 (21µm), B-4-7 (28µm), B-4-8 (34µm).

### Beispiel 5: Bleistifthärte, Stahlwolleverkratzung, Lösemittelbeständigkeit

Die in den Beispielen 4 und 5 erhaltenen beschichteten Folien wurden hinsichtlich Bleistifthärte, Stahlwolleverkratzung und Lösemittelbeständigkeit mit den oben angegebenen Testmethoden überprüft. Die Ergebnisse sind in Tabelle 1 zusammengefasst.

**Tabelle 1: Lösemittelbeständigkeit, Bleistifthärte und Kratzfestigkeit (B-3 sind die beschichtete Folien aus Beispiel 3; B-4 sind die beschichteten Folien aus Beispiel 4; 1-1-Substrat ist eine als Vergleichsbeispiel dienende Folie Makrofol DE 1-1 (Bayer) mit zwei glatten Seiten).**

| **Untersuchte Folien** | **Lösemittel** | **Bleistifthärte** | **Stahlwolle (Hersteller Rakso, No. 00)** |
|---|---|---|---|
| | **IP/MPA/X/EA/Ac** | **500 g Mitsubishi** | **560 g / 10 DH** |
| | **1h/RT** | | **ΔG / ΔH** |
| **1-4 Substrat (PC)** | **0/5/5/5/5** | **4B** | **--** |
| B-4-1 2 µm | 0/0/0/0/0 | H | 2/10 |
| B-4-2 4 µm | 0/0/0/0/0 | H | 2/11 |
| B-4-3 6 µm | 0/0/0/0/0 | H | 1/7 |
| B-4-4 11 µm | 0/0/0/0/0 | H | 2/9 |
| B-4-5 15µm | 0/0/0/0/0 | H | 2/14 |
| **1-M Substrat (PC)** | **0/5/5/5/5** | **3B** | **--** |
| B-3-1 5 µm | 0/0/0/0/0 | H | 1/4 |
| B-3-2 7 µm | 0/0/0/0/0 | H | 2/15 |
| **1-1 Substrat (PC)** | **0/5/5/5/5** | **3B** | **100/285** |

Die Tabelle 1 zeigt, dass die erfindungsgemäße Beschichtung in allen gewählten Schichtstärken, sogar schon in dünner Schicht ab 2 µm eine gute Abdeckung der strukturierten Polycarbonat-Oberfläche gewährleistet. Die Lösemittelbeständigkeit ist in allen beschichteten Proben gegeben. Im Vergleich dazu ist unbeschichtetes Polycarbonat sehr empfindlich gegen 1-Methoxy-2-propylacetat, Xylol, Ethylacetat und Aceton.

Dasselbe gilt für die Kratzfestigkeit im Stahlwolle-Test. Auch hier ist deutlich zu sehen, dass die Beschichtung bei allen Proben unabhängig von dem Dicke des Lacks einen Schutz der Polycarbonat-Oberfläche gewährleistet. Die Bleistifthärte der beschichteten Oberflächen steigt um 4 - 5 Einheiten gegenüber der unbeschichteten Folie.

### Beispiel 6: Optische Eigenschaften

Es wurden die in den Beispielen 3 und 4 erhaltenen beschichteten Folien B-3 und B-4 mit kommerziell erhältlichen blendfrei ausgestalteten Folien hinsichtlich der optischen Eigenschaften bewertet. Dabei wurden die Transmission (senkrechter Lichteinfall), der Haze, der Glanz und die Rauheit nach den oben angegeben Verfahren bestimmt. Für diesen Vergleich wurden 2 verschiedene AG-Filme der Firma MSK (Japan) untersucht. So zeigen diese kommerziellen AG-Filme Hazewerte zwischen 6 und 11%, andere Firmen geben wünschenswerte Hazewerte bis 40% an (z.B. J Touch). Des Weiteren sollte wegen der geforderten Funktion der Antiblendwirkung kein allzu hoher Glanzwert eingestellt werden (GU < 100). Für alle Proben liegen die Transmissionswerte über 90%. Weiterhin sind die optischen Parameter Sparkle, DOI/MTF (Pixelrasterbreite und Höhe von jeweils 244.5µm) und der Reflexionsgrad Rs im Vergleich zu den kommerziellen Produkten in guter Übereinstimmung.

**Tabelle 2.1: Zusammenfassung der optischen Messwerte**

| **Probe** | **Transmission [%]** | **Haze [%]** | **Gloss 60° [GU]** | **Ra [nm]** | **Rz [nm]** |
|---|---|---|---|---|---|
| GL 110 (MSK)*) | 90.88 | 6 | 83.1 | 194 | 744 |
| GL 130 (MSK)*) | 90.87 | 10.2 | 60.4 | 374 | 1620 |
| AG-Film: CARU Clearguard **) | 89.4 | 12.0 | 73.0 | | |
| 1-M Substrat | 90.9 | 76.6 | 4.0 | 180-230 | 800-1300 |
| B-3-1 5 µm | 92.1 | 10.9 | 44.7 | 208 | 885 |
| B-3-2 7 µm | 92.2 | 7.4 | 67.2 | 183 | 642 |
| B-3-3 18 µm | 92 | 5.7 | 87.7 | 82 | 196 |
| B-3-4 15 µm | 92 | 6.3 | 84.7 | 103 | 268 |
| B-3-5 19 µm | 91.9 | 5.6 | 88.2 | 61 | 209 |
| 1-4 Substrat | 90 | 82.7 | 3.2 | 650-720 | 2800-3500 |
| B-4-2 4 µm | 91.9 | 35.3 | 18.5 | 325 | 1325 |
| B-4-3 6 µm | 92.2 | 24.2 | 24.8 | 387 | 1544 |
| B-4-4 11 µm | 92.3 | 14.5 | 38.2 | 299 | 988 |
| B-4-515 µm | 92.3 | 7.7 | 58.5 | 275 | 682 |
| B-4-621 µm | 92.2 | 5.9 | 76.5 | 264 | 521 |
| B-4-7 28 µm | 92.3 | 4.2 | 85.3 | 260 | 467 |
| B-4-8 34 µm | 92.4 | 4.6 | 88.3 | 244 | 502 |

**Tabelle 2.2: Zusammenfassung der optischen Messwerte (Fortsetzung von Tabelle 2.1)**

| **Probe** | **Sparkle [@ 245 µm]** | **DOI/MTF [% @ 245 µm]** | **Rs [% @ 45°]** | **Lackdicke [µm]** |
|---|---|---|---|---|
| GL 110 (MSK)*) | 0.035 | 97.07 | 0.561 | |
| GL 130 (MSK) *) | 0.033 | 95.33 | 0.257 | |
| AG-Film: CARU Clearguard **) | | | | |
| 1-M Substrat | | | | |
| B-3-1 5 µm | | | | 5 |
| B-3-2 7 µm | 0.031 | 97.61 | 0.800 | 7 |
| B-3-3 18 µm | 0.025 | 97.94 | 1.713 | 18 |
| B-3-4 15 µm | | | | 15 |
| B-3-5 19 µm | | | | 19 |
| 1-4 Substrat | 0.029 | 44.20 | 0.053 | |
| B-4-2 4 µm | 0.055 | 99.35 | 0.188 | 4 |
| B-4-3 6 µm | 0.043 | 99.35 | 0.234 | 6 |
| B-4-4 11 µm | 0.039 | 99.02 | 0.345 | 11 |
| B-4-515 µm | 0.035 | 98.65 | 0.551 | 15 |
| B-4-621 µm | 0.040 | 99.02 | 0.775 | 21 |
| B-4-7 28 µm | 0.040 | 98.70 | 0.985 | 28 |
| B-4-8 34 µm | | | | 34 |

| | | | | |
|---|---|---|---|---|
| *) Handelsprodukte der Meihan Shinku Kogyo Co. Ltd., Japan **) Handelsnamen | | | | |

In den Tabellen 2.1 und 2.2 gilt folgendes: Ra ist der arithmetische Mittelwert der absoluten Werte der Profilabweichungen innerhalb der Bezugsstrecke. Rz ist das arithmetische Mittel aus den größten Einzelrautiefen mehrerer aneinandergrenzenden Einzelmessstrecken. Sparkle ist definiert als das Verhältnis der Varianz (σ) und dem Mittelwert (µ) der gemessenen Grauwertverteilung bei einem gegebenen Pixelraster (vorgegeben durch das Gerät SMS 1000: Subpixelbreite (57.4 µm) + Stegbreite (187.1 µm) = 244,5 µm). DOI/MTF ist das Verhältnis des optischen Kontrastes des Objekts (hier: Abbildung ohne Antiglare-Film) und des Bildes (hier: Abbildung mit Antiglare-Film). Das Pixelraster ist mit 244,5 µm durch das Gerät SMS 1000 vorgegeben. Rs ist der prozentuale Anteil des regulär reflektierten Lichtes bei 45° Einfallswinkel des Lichtes.

Die Proben B-3-X sind auf einem 1-M Substrat appliziert, während die Proben B-4-X auf einem 1-4 Substrat aufgebracht wurden.

Für handelsübliche Antiglare-Folien liegen die Rz-Werte über 600 nm. Ferner ist ein Glanzwert unter GU 85 anzustreben. Typischerweise findet man DOI/MTF Werte ≥ 95 %.

Folien mit Rz-Werten > 600 nm werden auf 1-M-Substrat bei Lackdicken von < 10 µm erreicht und zeigen dann Glanzwerte GU ≤ 70 und DOI/MTF Werte > 96 %. Auf 1-4 Folien werden Rz-Werte > 600 nm für Lackdicken unter einem Wert erreicht, der zwischen 15 und 21 µm liegt. Hier sind die Glanzwerte GU ≤ 70 und die korrespondierenden DOI/MTF-Werte > 98 %.

Wie aus Tabelle 2 hervorgeht, weisen die erfindungsgemäßen beschichteten Folien eine ausgezeichnete Blendfreiheit auf. Somit konnte gezeigt werden, dass die beschichteten Folien gemäß der vorliegenden Erfindung blendfreie Eigenschaften aufweisen bei gleichzeitiger Kratzfestigkeit und Beständigkeit gegenüber vielen Lösungsmitteln wie insbesondere Aceton, das gegenüber Polycarbonat am aggressivsten reagierende organische Lösungsmittel. Damit sind die erfindungsgemäßen Folien ausgezeichnet geeignet für die Anwendung auf vielen Gebieten der Technik, insbesondere in solchen, in denen eine transparente, blendfreie Oberfläche mit einer hohen mechanischen und chemischen Beständigkeit gefragt ist. Insbesondere eignen sich die erfindungsgemäßen beschichteten Folien für die Verwendung als Frontscheibe von Displays von Computerbildschirmen, Fernsehern, Anzeigegeräten und Mobilfunktelefonen.

## Patentansprüche

1. Beschichtungsmittel, umfassend
(a) mindestens ein thermoplastisches Polymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel;
wobei der Feststoffgehalt des Beschichtungsmittels im Bereich von ≥ 0 bis ≤ 40 Gew.-%, gemessen am Gesamtgewicht des Beschichtungsmittels, liegt, und
wobei der Anteil an ethylenisch ungesättigten Gruppen mindestens 3 mol pro kg des Festanteils des Beschichtungsmittels beträgt.

2. Beschichtungsmittel gemäß Anspruch 1 , wobei das Lösungsmittel (d) 1-Methoxy-2-propanol umfasst.

3. Beschichtungsmittel gemäß mindestens einem der vorhergehenden Ansprüche, wobei das (a) thermoplastische Polymer eine Vicaterweichungstemperatur VET gemäß ISO 306 von mindestens 90 °C aufweist.

4. Beschichtungsmittel gemäß mindestens einem der vorhergehenden Ansprüche, wobei das thermoplastische Polymer PMMA-Homopolymere und Copolymere aus 70 Gew.-% bis 99,5 Gew.-% Methylmethacrylat und 0,5 Gew.-% bis 30 Gew.-% Methylacrylat umfasst.

5. Blendfreie, beschichtete Kunststofffolie, umfassend eine Kunststofffolie mit einer blendfrei ausgestalteten Oberfläche und einer Beschichtung auf dieser Oberfläche, wobei diese Beschichtung erhältlich ist durch Beschichten mit einem Beschichtungsmittel gemäß mindestens einem der Ansprüche 1 bis 4, wobei die Beschichtung eine Schichtdicke im Bereich von ≥ 2 µm und ≤ 20 µm aufweist.

6. Beschichtete Kunststofffolie gemäß Anspruch 5, wobei die Folie eine Polycarbonatfolie umfasst.

7. Beschichtete Kunststofffolie gemäß Anspruch 5 oder Anspruch 6, wobei die mindestens eine blendfreie Oberfläche der Kunststofffolie im unbeschichteten Zustand durch eine Rautiefe Rz gemäß DIN EN ISO 4287 im Bereich von ≥ 800 und ≤ 3600 nm gekennzeichnet ist.

8. Beschichtete Kunststofffolie gemäß mindestens einem der Ansprüche 5 bis 7, wobei der Glanzwert GU der mindestens einen beschichteten Oberfläche nach ASTM-D2457 bei 60° ≤ 80 beträgt.

9. Beschichtete Kunststofffolie gemäß mindestens einem der Ansprüche 5 bis 7, wobei die Oberfläche der Beschichtung eine Rauheit Rz gemäß DIN EN ISO 4287 von mindestens 600 nm aufweist.

10. Verfahren zur Herstellung einer beschichteten Folie, umfassend die Schritte
(i) Bereitstellen einer Folie mit mindestens einer blendfreien Oberfläche der Folie;
(ii) Beschichten der Folie auf der Seite der blendfreien Oberfläche mit einem Beschichtungsmittel, umfassend
(a) mindestens ein thermoplastisches Polymer in einem Gehalt von mindestens 30 Gew.-% des Festanteils des Beschichtungsmittels;
(b) mindestens einen UV-härtbaren Reaktivverdünner in einem Gehalt von mindestens 30 Gew.-% des Festanteils des Beschichtungsmittels;
(c) mindestens einen Fotoinitiator in einem Gehalt von ≥ 0,1 bis ≤ 10 Gewichtsteilen des Festanteils des Beschichtungsmittels; und
(d) mindestens ein organisches Lösungsmittel; wobei die Beschichtung eine Schichtdicke im Bereich von ≥ 2 µm und ≤ 20 µm aufweist und der Feststoffgehalt des Beschichtungsmittels im Bereich von ≥ 0 bis ≤ 40 Gew.-%, gemessen am Gesamtgewicht des Beschichtungsmittels, liegt, und wobei der Anteil an ethylenisch ungesättigten Gruppen mindestens 3 mol pro kg des Festanteils des Beschichtungsmittels beträgt;
(iii) Trocknen der Beschichtung;
(iv) gegebenenfalls zurechtschneiden, dekaschieren, bedrucken und/oder thermisches oder mechanisches Verformen der Folie; und
(v) Bestrahlen der Beschichtung mit aktinischer Strahlung, dabei Härten der Beschichtung.

11. Erzeugnis, umfassend mindestens eine beschichtete Kunststofffolie gemäß mindestens einem der Ansprüche 5 bis 9, wobei das Erzeugnis ausgewählt ist aus der Gruppe bestehend aus Architekturverscheibungen, Abdeckscheiben, Frontscheiben für Displays sowie der nichtglänzenden Kunststoffteile für Elektrik, Elektronik und Fahrzeuginnenausstattung.

12. Erzeugnis gemäß Anspruch 11, wobei das Display ein Display von Computerbildschirmen, Fernsehern, Anzeigegeräten und Mobilfunktelefonen und das nicht-glänzende Kunststoffteil ein Elektronikgehäuseteil oder Innenaustattungsteil von Automobilen, Schienenfahrzeugen, Wasserfahrzeugen oder Flugzeugen ist.

13. Verwendung der beschichteten Kunststofffolie gemäß mindestens einem der Ansprüche 5 bis 9 als hochtransparente blendfreie Frontscheibe für Displays oder als nicht-glänzendes Kunststoffteil für Elektrik, Elektronik und Fahrzeuginnenausstattung.

14. Verwendung gemäß Anspruch 13, wobei das Display ein Display von Computerbildschirmen, Fernsehern, Anzeigegeräten und Mobilfunktelefonen und das nicht-glänzende Kunststoffteil ein Elektronikgehäuseteil oder Innenaustattungsteil von Automobilen, Schienenfahrzeugen, Wasserfahrzeugen oder Flugzeugen ist.

## Claims

1. Coating composition comprising
(a) at least one thermoplastic polymer in a content of at least 30% by weight of the solids content of the coating composition;
(b) at least one UV-curable reactive diluent in a content of at least 30% by weight of the solids content of the coating composition;
(c) at least one photoinitiator in a content of ≥ 0 1 to ≤ 10 parts by weight of the solids content of the coating composition; and
(d) at least one organic solvent,
wherein the solids content of the coating composition is in the range from ≥ 0 to ≤ 40% by weight, based on the total weight of the coating composition, and wherein the proportion of ethylenically unsaturated groups is at least 3 mol per kg of the solids content of the coating composition.

2. Coating composition according to Claim 1, wherein the solvent (d) comprises 1-methoxy-2-propanol.

3. Coating composition according to at least one of the preceding claims, wherein the (a) thermoplastic polymer has a Vicat softening temperature VET according to ISO 306 of at least 90°C.

4. Coating composition according to at least one of the preceding claims, wherein the thermoplastic polymer comprises PMMA homopolymers and copolymers of 70% by weight to 99.5% by weight of methyl methacrylate and 05% by weight to 30% by weight of methyl acrylate

5. Anti-glare, coated polymer film comprising a polymer film having an anti-glare surface and a coating on this surface, said coating being obtainable by coating with a coating composition according to at least one of Claims 1 to 4, said coating having a layer thickness in the range of ≥ 2 µm and ≤ 20 µm.

6. Coated polymer film according to Claim 5, wherein the film comprises a polycarbonate film.

7. Coated polymer film according to Claim 5 or Claim 6, wherein the at least one anti-glare surface of the polymer film in the uncoated state is **characterized by** a roughness depth Rz according to DIN EN ISO 4287 in the range of ≥ 800 and ≤ 3600 nm

8. Coated polymer film according to at least one of Claims 5 to 7, wherein the gloss value GU of the at least one coated surface according to ASTM-D2457 at 60° is ≤ 80

9. Coated polymer film according to at least one of Claims 5 to 7, wherein the surface of the coating has a roughness Rz according to DIN EN ISO 4287 of at least 600 nm.

10. Process for producing a coated film, comprising the steps of:
(i) providing a film having at least one anti-glare surface of the film;
(ii) coating the film on the side of the anti-glare surface with a coating composition comprising
(a) at least one thermoplastic polymer in a content of at least 30% by weight of the solids content of the coating composition;
(b) at least one UV-curable reactive diluent in a content of at least 30% by weight of the solids content of the coating composition;
(c) at least one photoinitiator in a content of ≥ 0.1 to ≤ 10 parts by weight of the solids content of the coating composition, and
(d) at least one organic solvent, wherein the coating has a layer thickness in the range of ≥ 2 µm and ≤ 20 µm and the solids content of the coating composition is in the range from ≥ 0 to ≤ 40% by weight, based on the total weight of the coating composition, and wherein the proportion of ethylenically unsaturated groups is at least 3 mol per kg of the solids content of the coating composition;
(iii) drying the coating;
(iv) optionally trimming, delaminating, printing and/or thermally or mechanically deforming the film, and
(v) irradiating the coating with actinic radiation to cure the coating.

11. Product comprising at least one coated polymer film according to at least one of Claims 5 to 9, said product being selected from the group consisting of architectural shift elements, covering panes, front panes for displays, and non-shiny plastics parts for electrics, electronics and motor vehicle interior trim

12. Product according to Claim 11, wherein the display is a display of computer screens, televisions, display systems and mobile phones, and the non-shiny plastics part is an electronics housing component or interior trim component of automobiles, rail vehicles, water vehicles or aircraft.

13. Use of the coated polymer film according to at least one of Claims 5 to 9 as a high-transparency anti-glare front pane for displays, or as a non-shiny plastics part for electrics, electronics and motor vehicle interior trim.

14. Use according to Claim 13, wherein the display is a display of computer screens, televisions, display systems and mobile phones, and the non-shiny plastics part is an electronics housing component or interior trim component of automobiles, rail vehicles, water vehicles or aircraft.

## Revendications

1. Agent de revêtement, comprenant.
(a) au moins un polymère thermoplastique en une teneur d'au moins 30 % en poids de la proportion de solides de l'agent de revêtement ;
(b) au moins un diluant réactif durcissable par UV en une teneur d'au moins 30 % en poids de la proportion de solides de l'agent de revêtement,
(c) au moins un photoinitiateur en une teneur de ≥ 0,1 à ≤ 10 parties en poids de la proportion de solides de l'agent de revêtement, et
(d) au moins un solvant organique ,
la teneur en solides de l'agent de revêtement se situant dans la plage allant de ≥ 0 à ≤ 40 % en poids, mesurée par rapport au poids total de l'agent de revêtement, et la proportion de groupes éthyléniquement insaturés étant d'au moins 3 moles par kg de la proportion de solides de l'agent de revêtement.

2. Agent de revêtement selon la revendication 1, dans lequel le solvant (d) comprend du 1-méthoxy-2-propanol.

3. Agent de revêtement selon au moins l'une quelconque des revendications précédentes, dans lequel (a) le polymère thermoplastique présente une température de ramollissement de Vicat VET selon ISO 306 d'au moins 90 °C

4. Agent de revêtement selon au moins l'une quelconque des revendications précédentes, dans lequel le polymère thermoplastique comprend des homopolymères de PMMA et des copolymères constitués par 70 % en poids à 99,5 % en poids de méthacrylate de méthyle et 0,5 % en poids à 30 % en poids d'acrylate de méthyle.

5. Film en matière plastique revêtu antireflet, comprenant un film en matière plastique ayant une surface antireflet et un revêtement sur cette surface, ce revêtement pouvant être obtenu par revêtement avec un agent de revêtement selon au moins l'une quelconque des revendications 1 à 4, le revêtement présentant une épaisseur de couche dans la plage ≥ 2 µm et ≤ 20 µm.

6. Film en matière plastique revêtu selon la revendication 5, dans lequel le film comprend un film de polycarbonate.

7. Film en matière plastique revêtu selon la revendication 5 ou la revendication 6, dans lequel ladite au moins une surface antireflet du film en matière plastique est **caractérisée** à l'état non revêtu par une profondeur de rugosité Rz selon DIN EN ISO 4287 dans la plage ≥ 800 et ≤ 3 600 nm

8. Film en matière plastique revêtu selon au moins l'une quelconque des revendications 5 à 7, dans lequel la valeui de brillance GU de ladite au moins une surface revêtue selon ASTM-D2457 à 60° est ≤ 80.

9. Film en matière plastique revêtu selon au moins l'une quelconque des revendications 5 à 7, dans lequel la surface du revêtement présente une rugosité Rz selon DIN EN ISO 4287 d'au moins 600 nm

10. Procédé de fabrication d'un film revêtu, comprenant les étapes suivantes .
(i) la préparation d'un film ayant au moins une surface de film antireflet ;
(ii) le revêtement du film sur le côté de la surface antireflet avec un agent de revêtement, comprenant.
(a) au moins un polymère thermoplastique en une teneur d'au moins 30 % en poids de la proportion de solides de l'agent de revêtement ;
(b) au moins un diluant réactif durcissable par UV en une teneur d'au moins 30 % en poids de la proportion de solides de l'agent de revêtement,
(c) au moins un photoinitiateur en une teneur de ≥ 0,1 à ≤ 10 parties en poids de la proportion de solides de l'agent de revêtement ; et
(d) au moins un solvant organique ; le revêtement présentant une épaisseur de couche dans la plage ≥ 2 µm et ≤ 20 µm, et la teneur en solides de l'agent de revêtement se situant dans la plage allant de ≥ 0 à ≤ 40 % en poids, mesurée par rapport au poids total de l'agent de revêtement, et la proportion de groupes éthyléniquement insaturés étant d'au moins 3 moles par kg de la proportion de solides de l'agent de revêtement ;
(iii) le séchage du revêtement,
(iv) éventuellement la découpe, le délaminage, l'impression et/ou le façonnage thermique ou mécanique du film , et
(v) l'exposition du revêtement à un rayonnement actinique, et ainsi le durcissement du revêtement

11. Article, comprenant au moins un film de matière plastique revêtu selon au moins l'une quelconque des revendications 5 à 9, l'article étant choisi dans le groupe constitué par les vitrages aichitecturaux, les plaques de recouvrement, les plaques frontales pour écrans et les pièces en matière plastique non brillantes pour équipements électriques, équipements électroniques et aménagements intérieurs de véhicules.

12. Article selon la revendication 11, dans lequel l'écian est un écran d'ordinateur, de télévision, d'appareil indicateur et de téléphone portable, et la pièce en matière plastique non brillante est une partie de boîtier d'équipement électronique ou une partie d'aménagement intérieur d'automobiles, de véhicules ferroviaires, de véhicules aquatiques ou d'aéronefs.

13. Utilisation du film en matière plastique revêtu selon au moins l'une quelconque des revendications 5 à 9 en tant que plaque frontale antireflet hautement transparente pour des écrans ou en tant que pièce en matière plastique non brillante pour des équipements électriques, des équipements électroniques et des aménagements intérieurs de véhicules.

14. Utilisation selon la revendication 13, dans laquelle l'écran est un écran d'ordinateur, de télévision, d'appareil indicateur et de téléphone portable, et la pièce en matière plastique non brillante est une partie de boîtier d'équipement électronique ou une partie d'aménagement intérieur d'automobiles, de véhicules ferroviaires, de véhicules aquatiques ou d'aéronefs.
